# FASCICULE DE BREVET EUROPEEN

(11) **EP 0 846 551 B1**
(45) Date de publication et mention de la délivrance du brevet: **13.11.2002**
(21) Numéro de dépôt: 97402886.2
(22) Date de dépôt: 01.12.1997
(51) Int. Cl.: B29C 70/38

(54) **Tête de drapage, pour la fabrication de plaques en matériau composite**
Bandlegekopf zur Herstellung von Verbundplatten
Tape laying head for manufacturing composite plates

(30) Priorité: 03.12.1996 FR 9614799
(43) Date de publication de la demande: 10.06.1998
(73) Titulaire: AEROSPATIALE Société Nationale Industrielle, 75781 Paris Cédex 16 (FR)
(72) Inventeur: Mesnage, Didier, 92210 Saint Cloud (FR); Meunier, Serge, 75014 Paris (FR)
(74) Mandataire: Poulin, Gérard

(56) Documents cités:
- EP-A- 0 255 425
- US-A- 3 253 490
- US-A- 4 508 584
- US-A- 4 569 716
- US-A- 4 990 213
- US-A- 5 078 592
- "SHIM AND HEAT AUTOMATE THERMOPLASTIC TAPE LAYING" MACHINE DESIGN, vol. 60, no. 26, 10 novembre 1988, page 74 XP000048229

## Description

### Domaine technique

L'invention concerne une tête de drapage destinée à être utilisée dans une machine de drapage pour fabriquer des plaques en matériau composite, à partir d'un produit de ruban ou en ruban, enroulé sur une bobine.

Par "plaques en matériau composite", on désigne toute pièce, plane ou non, formée d'un empilement de couches, elles mêmes constituées de fibres et de résine.

La tête de drapage selon l'invention est particulièrement adaptée pour permettre la fabrication de plaques à partir d'un produit sous forme de ruban, constitué de fibres unidirectionnelles, préimprégnées d'une résine thermoplastique ou d'une résine thermodurcissable à faible pégosité.

### Etat de la technique

La technique du drapage est utilisée couramment pour fabriquer des plaques en matériau composite, à partir d'un produit en bande ou en ruban, enroulé sur une bobine et présentant une largeur fixée, habituellement relativement faible par rapport à la surface de la plaque à fabriquer.

Pour réaliser une plaque en matériau composite par drapage, on effectue d'abord des découpes dans le ruban. On drape ensuite ces découpes sur un marbre, en les juxtaposant bord à bord, pour former successivement un certain nombre de couches dont chacune recouvre l'ensemble ou une partie de la surface de la plaque à réaliser. Plus précisément, le produit sous forme de ruban comprend généralement des fibres unidirectionnelles, telles que des fibres de carbone, dont on fait varier l'orientation d'une couche à l'autre en déposant, selon des orientations différentes, les découpes correspondant à des couches successives de l'empilement.

Cette technique de drapage est utilisée couramment, de façon manuelle, pour fabriquer des pièces en matériau composite à partir de rubans de fibres unidirectionnelles préimprégnées de résine thermodurcissable ou thermoplastique, ou encore à partir de fibres unidirectionnelles non imprégnées de résine, lorsqu'on utilise le procédé RTM.

Cependant, lorsque les opérations de drapage sont réalisées manuellement, elles constituent des tâches longues et fastidieuses qui limitent l'utilisation de cette technique à la fabrication de pièces unitaires.

Pour permettre l'industrialisation de ce procédé de drapage, on a développé des machines mettant en oeuvre cette technique. Ces machines comprennent généralement un marbre destiné à recevoir les découpes, une tête de drapage servant à couper le ruban de produit puis à déposer les découpes sur le marbre, ainsi que des moyens pour déplacer la tête de drapage et en faire varier l'orientation selon un nombre de degrés de liberté variable d'une machine à l'autre.

La plupart des machines de drapage existantes sont destinées à effectuer le drapage de fibres préimprégnés de résine thermodurcissable. En effet, seul ce type de matériau présente naturellement une aptitude au collage (ou "pégosité") suffisante pour qu'une découpe soit immédiatement maintenue en position dès que la tête de drapage commence à appliquer cette découpe sur le marbre ou sur la couche déposée précédemment.

Comme l'illustre à titre d'exemple le document US-A-4 519 285, la tête de drapage d'une telle machine comprend habituellement une bobine de stockage du ruban préimprégné, un système de coupe, un rouleau d'application pressant la découpe sur le marbre et un moyen pour récupérer le film séparateur qui empêche le collage du ruban lorsqu'elle est bobinée.

Lorsque le ruban est formé de fibres préimprégnées de résine thermoplastique et lorsqu'il est formé de fibres sèches, les découpes tendent à être entraînées ou déplacées par la tête de drapage au fur et à mesure qu'elles sont déposées sur le marbre ou sur la couche précédente. Cela complique alors considérablement l'industrialisation du procédé de drapage.

Dans le cas où le ruban du matériau à draper est formé de fibres préimprégnées de résine thermoplastique, on a proposé de remédier à cet inconvénient en équipant la tête de drapage de moyens de préchauffage et de chauffage rendant adhésive la résine qui imprègne les fibres.

Plus précisément, et comme l'illustrent notamment les documents US-A-4 714 509, US-A-5 177 340 et US-A-4 569 716, la découpe en cours de drapage et la couche précédemment déposée sur le marbre sont généralement chauffées de façon simultanée, par des moyens de chauffage embarqués sur la tête de drapage, avant que la découpe ne soit appliquée sur le marbre ou sur la couche précédente par un rouleau d'application. Comme sur les têtes de drapage destinées au drapage de fibres préimprégnées de résine thermodurcissable, un système de coupe est aussi embarqué sur la tête, pour réaliser les découpes lorsque l'avance du ruban est interrompue.

Lorsque la résine thermoplastique est chauffée jusqu'à une température à laquelle elle devient adhésive, son aptitude au collage (ou "pégosité") reste très inférieure à celle d'une résine thermodurcissable. Le maintien en position de la découpe en cours de drapage ne peut donc pas être assuré de façon sûre lorsque la découpe commence à être appliquée sur le marbre par le rouleau d'application.

Dans le document US-A-5 078 821, on a proposé de placer, en aval du rouleau d'application (en considérant le déplacement relatif entre la tête de drapage et le ruban), une hotte présentant successivement un compartiment chauffant et un compartiment de refroidissement. Le refroidissement de la découpe qui vient d'être déposée sur le marbre est destiné à accélérer la consolidation de la jonction entre les couches. Cependant, un collage s'opposant efficacement à tout déplacement relatif entre la découpe en cours de drapage et la couche précédente ne peut être obtenu que par un temps de chauffage suffisamment long pour empêcher un éventuel déplacement de la découpe au début de son drapage.

Le document US-A-4 990 213 décrit une tête de drapage conçue pour déposer un ruban de matériau composite à matrice thermoplastique sur un mandrin, par exemple de section rectangulaire. La tête de drapage comprend un support sur lequel sont montés, selon la direction de déroulement du ruban, un rouleau portant ledit ruban, un mécanisme d'avance de celui-ci, un organe de coupe du ruban, un système de préchauffage, un rouleau presseur chauffant, un patin de refroidissement et une pince de maintien temporaire du ruban sur le mandrin, apte à être rétractée après un petit déplacement de la tête de drapage.

Enfin, le document EP-A-0 255 425 propose une tête de drapage d'un ruban composite imprégné de résine époxy. La tête de drapage comprend un sabot applicateur devant lequel est placé un bourrelet élastique de compactage. Ce dernier maintient l'extrémité avant de la découpe contre le marbre, par gravité et éventuellement avec l'aide d'un ressort, avant que le sabot n'assure sa fonction d'applicateur.

### Exposé de l'invention

L'invention a pour objet une tête de drapage selon la revendication 1 dont la conception originale permet de garantir le positionnement et l'orientation des découpes, quelle que soit la nature du produit sous forme de ruban utilisé, et notamment dans le cas de fibres unidirectionnelles préimprégnées de résine thermoplastique et dans le cas de fibres sèches, tout en autorisant un drapage à grande vitesse.

Conformément à l'invention, ce résultat est obtenu au moyen d'une tête de drapage, pour la fabrication de plaques en matériau composite, à partir d'un rouleau de produit sous forme de ruban, ladite tête comprenant un corps apte à être déplacé selon une direction de déplacement et supportant successivement, selon une direction de déroulement du ruban :
- des moyens de coupe du ruban, aptes à réaliser dans celle-ci des découpes successives ;
- des moyens d'application, pour appliquer successivement chaque découpe sur un marbre de référence extérieur à la tête de drapage ; et
- des moyens de bridage escamotables, comprenant au moins un organe presseur, un moyen de commande pour appliquer cet organe presseur contre le marbre, de façon à bloquer, par pression, une partie d'extrémité avant de chaque découpe successive entre cet organe presseur et le marbre, des moyens de guidage autorisant un déplacement relatif entre le corps et l'organe presseur selon ladite direction de déplacement, et des moyens de rappel aptes à assurer un retour de l'organe presseur dans une position d'attente, proche des moyens d'application lorsque le moyen de commande est relâché.

Le montage de moyens de bridage escamotables sur la tête de drapage permet de maintenir efficacement les découpes dès qu'elles commencent à être déposées sur le marbre. Il est ainsi possible de draper, selon une orientation et un positionnement précis et sûrs, des découpes formées de fibres imprégnées d'une résine thermodurcissable à très faible pégosité ou de fibres préimprégnées de résine thermoplastique, bien que leur aptitude au collage soit très inférieure à celle des fibres préimprégnées de résine thermodurcissable, même lorsqu'elles sont chauffées.

Dans une forme de réalisation préférentielle de l'invention, l'organe presseur et son moyen de commande sont portés par un même support. Ce support est alors monté sur le corps de la tête de drapage par l'intermédiaire des moyens de guidage, les moyens de rappel étant interposés entre le corps et le support.

Dans ce cas, l'organe presseur peut notamment être monté à une première extrémité d'un levier, dont une région centrale est articulée sur le support. Le moyen de commande agit alors sur une extrémité opposée du levier.

Dans une application préférentielle de l'invention, la tête de drapage est destinée au drapage d'un produit formé de fibres préimprégnées d'un matériau thermoplastique. Dans ce cas, des moyens de chauffage sont montés sur un support lié aux moyens d'application, entre les moyens de coupe et les moyens d'application, et des moyens de refroidissement sont associés aux moyens d'application.

Avantageusement, les moyens de chauffage comprennent un organe en forme de sabot, monté sur le support et pourvu d'un orifice de soufflage d'air chaud, à son extrémité avant tournée vers une interface ruban-marbre.

De préférence, les moyens de chauffage comprennent aussi une buse de préchauffage du ruban et une buse de préchauffage du marbre.

L'orifice de soufflage et les buses de préchauffage sont, avantageusement, à ouvertures réglables.

Dans une forme de réalisation préférentielle, les moyens d'application comprennent un rouleau presseur monté sur le corps de la tête de drapage, immédiatement en aval de l'organe en forme de sabot. Les moyens d'applications comprennent en outre des moyens pour appliquer ce rouleau presseur contre le marbre selon une pression donnée, réglable.

Les moyens de refroidissement agissent alors sur une région du rouleau presseur située en aval de la région de ce rouleau en contact avec le marbre.

Pour permettre d'effectuer un drapage à grande vitesse, il est souhaitable que le défilement du ruban de produit ne soit pas interrompu lorsque celle-ci est coupée pour former les différentes découpes. A cet effet, les moyens de coupe comprennent de préférence un ensemble mobile comportant un système de coupe et un moyen de pincement pour lier en translation le système de coupe et le ruban de produit déroulé de la bobine, des deuxièmes moyens de guidage autorisant un déplacement relatif entre cet ensemble mobile et le corps de la tête de drapage, selon une direction de déroulement du ruban, et des deuxièmes moyens de rappel aptes à assurer un retour de l'ensemble mobile dans une position de repos, lorsque le moyen de pincement et le système de coupe sont relâchés.

Avantageusement, le corps de la tête de drapage supporte de plus des moyens de stockage du rouleau, des moyens d'entraînement du ruban, des moyens de positionnement latéral du ruban, des moyens de détection de l'extrémité avant du ruban et des moyens de mesure de longueur de ruban déroulée.

Dans ce cas, les moyens de stockage du rouleau incluent de préférence des moyens de tension du ruban.

### Brève description des dessins

On décrira à présent, à titre d'exemple non limitatif, une forme de réalisation préférentielle de l'invention en se référant aux dessins annexés, dans lesquels :
- la figure 1 est une vue de côté, en coupe partielle, qui représente schématiquement une tête de drapage conforme à l'invention ;
- la figure 2 est une vue en coupe comparable à la figure 1, représentant à plus grande échelle une partie arrière de la tête de drapage, comprenant les moyens de coupe du ruban ; et
- la figure 3 est une vue en coupe comparable à la figure 2 représentant à plus grande échelle une partie avant de la tête de drapage, comprenant les moyens de chauffage, les moyens d'application, les moyens de refroidissement et les moyens de bridage.

### Exposé détaillé d'une forme de réalisation préférentielle

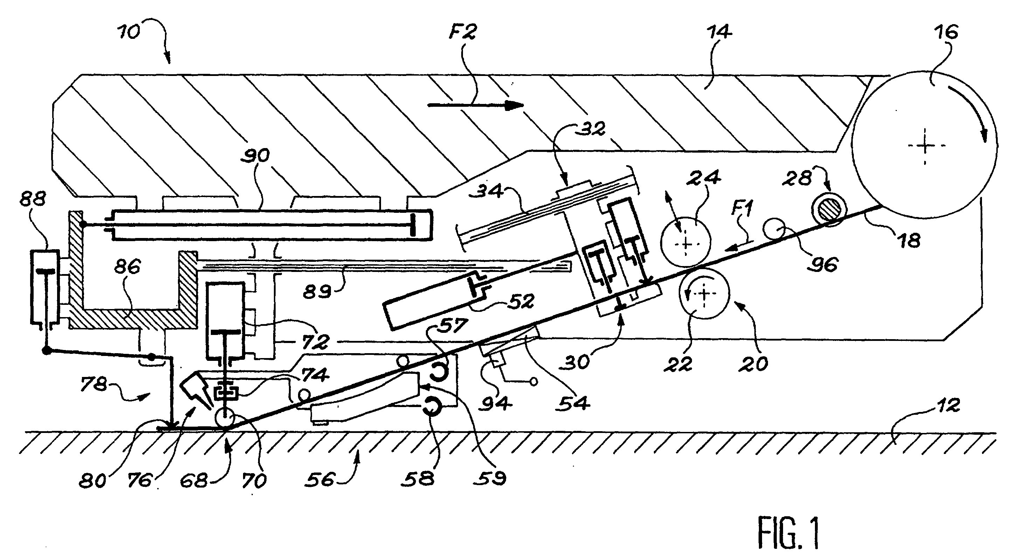

Sur la figure 1, on a représenté de façon schématique une tête de drapage 10 conforme à l'invention, conçue pour être intégrée dans une machine de drapage destinée à fabriquer à grande vitesse des plaques en matériau composite, à partir d'un rouleau de produit sous forme de ruban.

De façon plus précise, la tête de drapage 10 illustrée sur la figure 1 est particulièrement adaptée pour effectuer le drapage à grande vitesse d'un ruban de fibres unidirectionnelles, telles que des fibres de carbone, préimprégnées d'une résine thermoplastique telle qu'une résine PPS, PEI ou PEEK.

En utilisant les moyens de chauffage avec des températures de chauffage adaptées et éventuellement les moyens de refroidissement qui l'équipent, la tête de drapage 10 illustrée sur la figure 1 peut aussi être utilisée pour draper des nappes de fibres préimprégnées d'une résine thermodurcissable à très faible pégosité.

La tête de drapage 10 est conçue pour être montée sur le portique d'une machine de drapage à commande numérique, de façon à pouvoir être orientée et déplacée selon des directions prédéterminées, au-dessus d'un marbre de référence 12 dont seule la face supérieure horizontale est illustrée partiellement sur la figure 1. Il est à noter que le mot "marbre" désigne indifféremment soit une table plane, soit un moule de forme plus complexe, selon que les plaques à fabriquer sont planes ou non.

La tête de drapage 10 comprend un corps 14 par lequel la tête est installée sur le portique de la machine. Ce corps 14 supporte l'ensemble des éléments fonctionnels de la tête de drapage 10.

Le produit sous forme de ruban 18 dont le drapage doit être effectué se présente sous la forme d'un rouleau dont la largeur, variable selon la nature du produit, est par exemple de 150 mm. Le diamètre de ce rouleau, qui dépend notamment de l'épaisseur du produit et de la longueur stockée, est généralement inférieur ou égal à 500 mm.

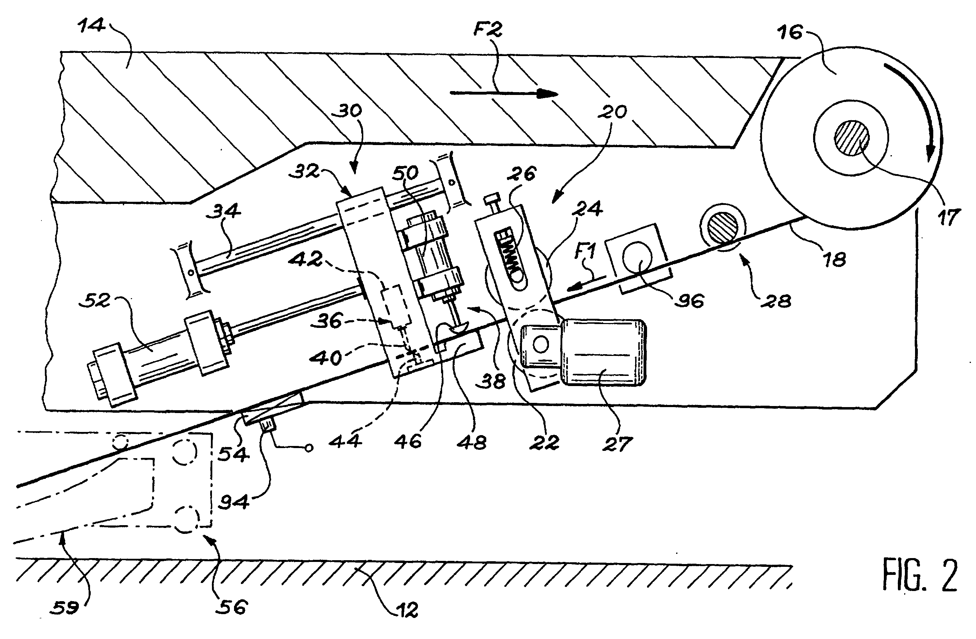

Sur la tête de drapage 10, le rouleau de produit à draper est placé sur une bobine 16, montée rotative sur le corps 14, entre deux flasques (non représentés). Un dispositif tel qu'un moteur à courant continu 17 (figure 2) exerce sur la bobine 16 un effort constant, de préférence réglable, qui permet d'appliquer sur le ruban 18 un effort de tension assurant son maintien en position tendue tout au long de l'application.

A la sortie de la bobine 16, le ruban 18 est entraîné par des moyens d'entraînement 20. Ces moyens d'entraînement 20 comprennent deux rouleaux débrayables 22 et 24, montés sur le corps 14 de la tête de drapage, de part et d'autre du ruban 18. Les axes de ces rouleaux 22 et 24 sont parallèles à l'axe de la bobine 16. Plus précisément, l'axe de la bobine 22 est fixe par rapport au corps 14, alors que l'axe de la bobine 24 est mobile, de façon à permettre aux moyens d'entraînement 20 d'occuper une position ouverte lors de l'engagement initial du ruban 18 et une position fermée lorsque la tête de drapage 10 est en fonctionnement. Un dispositif presseur, matérialisé par un ressort 26 sur la figure 2, permet d'appliquer sur l'axe de la bobine 24 une pression de serrage réglable, lorsque les moyens d'entraînement 20 sont actionnés. Un système moteur 27 (figure 2) commande la rotation du rouleau 22 dans le sens du déroulement du ruban 18, comme l'illustre la flèche F1.

En amont des moyens d'entraînement 20, le corps 14 de la tête de drapage supporte des moyens 28 de positionnement latéral du ruban 18 à la sortie de la bobine 16. Ces moyens de positionnement latéral 28 comprennent par exemple un ou plusieurs cylindres de guidage munis de flasques dont l'écartement correspond à la largeur du ruban 18, aux jeux fonctionnels près.

En aval des moyens d'entraînement 20, par rapport au sens de déroulement du ruban 18 depuis la bobine 16, le corps 14 de la tête de drapage supporte des moyens de coupe, désignés de façon générale par la référence 30 sur les figures 1 et 2. Dans la forme de réalisation préférentielle illustrée plus en détail sur la figure 2, ces moyens de coupe 30 permettent de couper le ruban 18 sans interrompre son défilement. Cette caractéristique accroît très sensiblement la vitesse de pose de la tête de drapage 10.

Les moyens de coupe 30 comprennent un ensemble mobile 32, monté sur le corps 14 de la tête de drapage par l'intermédiaire de moyens de guidage 34 tels que des colonnettes, permettant à l'ensemble 32 de se déplacer en translation alternativement dans l'un et l'autre sens, selon une direction parallèle à la direction de déroulement du ruban 18, comme illustrée par la flèche F1 sur les figures 1 et 2.

L'ensemble mobile 32 comprend un système de coupe 36 ainsi qu'un moyen de pincement 38 (figure 2).

Dans la forme de réalisation représentée, le système de coupe 36 comprend, d'un côté du ruban 18 en défilement, une lame mobile 40 orientée selon une direction transversale par rapport au ruban 18 et apte à se déplacer perpendiculairement à ce dernier, selon un mouvement de va et vient, sous l'action de moyens de commande 42. Le système de coupe 36 comprend en outre une contre-lame 44, placée du côté opposé à la lame 40 par rapport au ruban 18 et montée fixement sur l'ensemble mobile 32.

Le moyen de pincement 38 comprend un mors mobile 46 et un mors fixe 48 situés de part et d'autre du ruban 18. Le mors fixe 48 peut notamment être monté fixement sur l'ensemble 32, du même côté que la contre-lame 44. Le mors mobile 46 est apte à être animé d'un mouvement de va et vient, perpendiculairement au plan du ruban 18, par rapport à l'ensemble mobile 32. La commande de ce mouvement de va et vient est assurée par un organe de commande tel qu'un vérin 50, monté sur l'ensemble mobile 32.

Grâce à l'agencement qui vient d'être décrit, les moyens de coupe 30 n'entravent pas le déroulement du ruban 18 lorsque la lame mobile 40 et le mors mobile 46 en sont écartés. Lorsqu'une découpe doit être réalisée, l'organe de commande 50 est actionné, de façon à pincer le ruban 18 en défilement entre le mors mobile 46 et le mors fixe 48. L'ensemble mobile 32 se déplace alors avec le ruban 18 dans le sens de la flèche F1. Les moyens de commande 42 sont alors actionnés, de façon à couper le ruban, sans pour autant que le défilement de celui-ci ne soit interrompu.

Lorsque la coupe du ruban est terminée et que la lame mobile 40 est revenue dans sa position inactive, l'organe de commande 50 est actionné de façon à relâcher le moyen de pincement 38. Des moyens de rappel 52, tels qu'un ressort, un vérin, etc., montés sur le corps 14, ramènent alors l'ensemble 32 dans une position de repos ou d'attente illustrée sur les figures 1 et 2. Cette position de repos ou d'attente est la position dans laquelle l'ensemble 32 est le plus proche de la bobine 16.

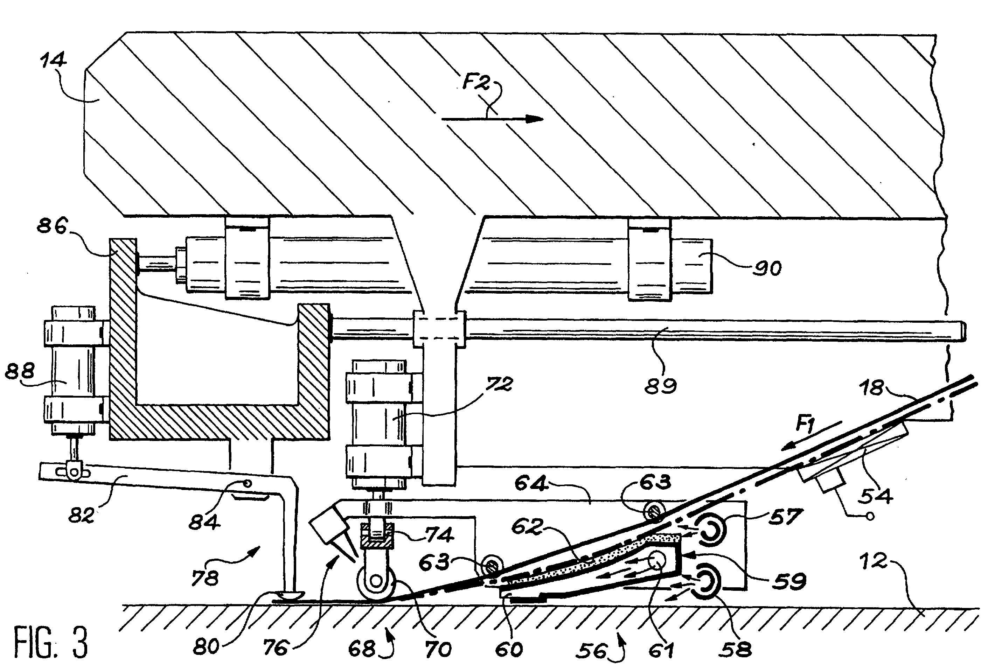

En aval des moyens de coupe 30, le ruban 18 qui se déroule de la bobine 16 défile sur une tablette de guidage 54, montée sur le corps 14 de la tête de drapage, puis devant des moyens de chauffage 56, illustrés plus en détail sur la figure 3.

Lorsqu'ils sont mis en oeuvre, c'est-à-dire lorsque le ruban 18 à draper est un ruban formé de fibres préimprégnées de résine thermoplastique, les moyens de chauffage 56, amènent progressivement la découpe faite dans le ruban 18 ainsi que la couche préalablement déposée sur le marbre 12 à une température favorisant le collage. A titre d'exemple nullement limitatif, dans le cas où la résine thermoplastique qui imprègne les fibres est une résine de type PEEK, la température peut être amenée progressivement à environ 400°C. Il est à noter que l'obtention de la température désirée, qui dépend également de la vitesse de déplacement de la tête 10, peut nécessiter successivement un préchauffage et un chauffage.

Les moyens de chauffage 56 sont montés sur un support 64 mobile par rapport au corps 14 de la tête de drapage 10.

Dans la forme de réalisation illustrée sur la figure 3, ces moyens de chauffage 56 comprennent deux buses de préchauffage 57, 58 montées sur le support 64.

Ces buses de préchauffage 57, 58 soufflent de l'air chaud respectivement vers la face inférieure du ruban 18 et vers la face supérieure du marbre 12 ou vers la couche préalablement déposée sur cette face. Les buses 57, 58 sont, de préférence, à ouvertures réglables et elles sont orientées vers l'avant de la tête de drapage 10, c'est-à-dire vers l'aval dans le sens du défilement du ruban.

En aval des buses de préchauffage 57, 58, dans le sens de défilement du ruban 18, les moyens de chauffage 56 comprennent un organe 59, en forme de sabot, monté sur le support 64. Cet organe 59 constitue une buse de chauffage de l'interface ruban 18-marbre 12 (ou couche préalablement déposée sur celui-ci). A cet effet, l'organe 59 présente à son extrémité avant par rapport à la tête de drapage, un orifice de soufflage 60 par lequel est délivré de l'air chaud en provenance d'une buse 61. L'ouverture de l'orifice de soufflage 60 est, de préférence, réglable.

Sur sa face supérieure, l'organe 59 en forme de sabot est revêtu d'un isolant thermique 62 présentant une face supérieure concave dans le sens de déplacement du ruban 18 (flèche F1).

A proximité des extrémités avant et arrière de l'organe 59 en forme de coin, le support 64 supporte des rouleaux-guides 63, légèrement espacés de la face supérieure concave de l'isolant thermique 62. Le ruban 18 défile entre les rouleaux-guides 63 et l'isolant thermique 62.

Il est à noter qu'en variante, les buses 57, 58 et 61 peuvent être remplacées par tout autre système chauffant sans contact, tel que des résistances chauffantes.

Immédiatement en aval des moyens de chauffage 56, le corps 14 de la tête de drapage supporte des moyens d'application 68, permettant d'appliquer la découpe en cours de pose sur les couches déjà déposées, avec une pression constante de consolidation permettant notamment de chasser les bulles d'air susceptibles d'être emprisonnées entre les couches successives de l'empilement. De préférence, la pression appliquée par les moyens d'application 68 est réglable, et suffisante pour prendre en compte la vitesse de drapage susceptible d'être atteinte par la machine.

Dans la pratique et comme l'illustre plus en détail la figure 3, les moyens d'application 68 comprennent un rouleau d'application 70 sur lequel agit un vérin pneumatique 72 porté par le corps 14 de la tête de drapage. Un régulateur de pression est associé au vérin 72. Un axe d'articulation 74 est interposé entre le vérin 72 et le rouleau d'application 70, afin de garantir une bonne application de celui-ci sur le marbre 12, sur toute sa longueur.

La tige du vérin 72 porte le support 64 des moyens de chauffage 56.

Le corps 14 de la tête de drapage supporte également des moyens de refroidissement 76, qui sont associés aux moyens d'application 68. Ces moyens de refroidissement 76 agissent sur le rouleau d'application 70, de façon à refroidir une région de celui-ci située en aval de la région de ce rouleau en contact avec le marbre 12, en considérant le sens de rotation du rouleau 70. Ces moyens de refroidissement 76, constitués par exemple par un jet d'air froid dirigé vers le rouleau 70, permettent de maintenir la température à un niveau adapté, par exemple à environ 100°C. En accélérant le refroidissement de la découpe dès qu'elle est appliquée sur le marbre par le rouleau 70, cette caractéristique facilite l'accrochage de la découpe sur la couche précédente.

En aval des moyens d'application 68 et des moyens de refroidissement 76, le corps 14 de la tête de drapage supporte des moyens 78 de bridage escamotables, qui vont à présent être décrits en se référant à la figure 3.

Ces moyens 78 de bridage escamotables comprennent au moins un organe presseur 80 tel qu'un patin, susceptible d'être appliqué contre une partie d'extrémité avant de chaque découpe, à proximité immédiate du rouleau d'application 70, c'est-à-dire dès que la partie d'extrémité avant de la découpe vient d'être déposée sur le marbre 12 ou sur la couche précédente. Les moyens 78 de bridage escamotables assurent ainsi le maintien en position de la partie d'extrémité avant de la découpe en cours de drapage, pendant une durée suffisante pour qu'un déplacement ultérieur de la découpe dû au déplacement de la tête de drapage 10 soit empêché. Cette caractéristique permet de garantir le positionnement et l'orientation des découpes, quelle que soit la nature du produit de ruban qui les constituent, même lorsque la force d'adhérence entre la découpe en cours de pose et la couche précédente est faible ou même inexistante. Il est ainsi possible de fabriquer des plaques à partir de rubans de fibres imprégnées de résine thermoplastique ou de résine thermodurcissable à très faible pégosité.

Dans la forme de réalisation illustrée sur les figures 1 et 3, l'organe presseur 80 est monté à une extrémité d'un levier 82, dont la partie centrale est articulée par un axe 84 sur un support 86. Un moyen de commande 88 tel qu'un vérin est interposé entre le support 86 et l'extrémité opposée du levier 82. Cet agencement permet de déplacer l'organe presseur 80 entre une position d'application, illustrée sur les figures 1 et 3, et une position d'attente. Dans la position d'application de l'organe presseur, celui-ci bloque, par pression, la partie d'extrémité avant de la découpe en cours de pose contre le marbre 12. Au contraire, dans la position d'attente de l'organe presseur, celui-ci est écarté du marbre 12 et des différentes couches déjà déposées sur celui-ci.

Le support 86 est monté sur le corps 14 de la tête de drapage par l'intermédiaire de moyens de guidage tels que des colonnettes 89, autorisant un déplacement relatif entre le corps 14 et le support 86, parallèlement à la direction de déplacement de la tête de drapage 10, matérialisé par la flèche F2 sur les figures 1 à 3. Des moyens de rappel 90 tels qu'un vérin, un ressort, etc. sont interposés entre le support 86 et le corps 14 de la tête de drapage, de façon à assurer un retour de l'organe presseur 80 dans une position d'attente illustrée sur les figures 1 et 3, lorsque le moyen de commande 88 est relâché. Cette position d'attente est la position dans laquelle l'organe presseur 80 est le plus proche du rouleau d'application 68.

Lorsqu'une découpe est déposée sur le marbre 12 à l'aide de la tête de drapage 10, cette découpe est entraînée par les moyens 20 d'entraînement du ruban, jusqu'à ce que son extrémité avant arrive en face de l'organe presseur 80, dans la position d'attente de celui-ci. Le ruban 18 occupe alors la position illustrée en trait mixte sur la figure 3, dans laquelle il repose sur la face supérieure concave de l'isolant thermique 62. L'angle de dépose du ruban sur le marbre est ainsi très proche de zéro, ce qui facilite l'application.

La partie d'extrémité avant de la découpe est ensuite bloquée sur le marbre 12 par l'actionnement du moyen de commande 88 dès que cette partie d'extrémité avant se trouve en face de l'organe presseur 80. Sous l'effet de ce blocage, le support 86, le moyen de commande 88, le levier 82 et l'organe presseur 80 sont immobilisés par rapport au marbre 12, alors que la tête de drapage 10 se déplace vers la droite dans la direction de la flèche F2 sur les figures 1 et 3. La découpe est donc parfaitement maintenue sur le marbre 12 et sur les couches déposées précédemment, alors qu'elle est progressivement déposée sous l'effet du déplacement continu de la tête de drapage. Le ruban 18 prend alors la configuration tendue illustrée en trait plein sur la figure 3, dans laquelle il est guidé par les rouleaux-guides 63.

Lorsqu'une longueur de découpe suffisante pour assurer son maintien par collage sur la couche précédente a été déposée, le moyen de commande 88 est relâché automatiquement, ce qui a pour effet d'écarter l'organe presseur 80 de la découpe. Le support 86 et les organes montés sur ce support sont alors dissociés du marbre 12. Les moyens de rappel 90 agissent alors automatiquement, de façon à ramener le support et les organes qu'il supporte dans leur position d'attente illustrée sur les figures 1 et 3.

Comme on l'a illustré schématiquement sur la figure 1, le corps 14 de la tête de drapage supporte en outre des moyens 94 de détection de l'extrémité avant du ruban 18. Ces moyens 94, qui peuvent notamment être montés sur la tablette de guidage 54, permettent de contrôler le positionnement de la partie d'extrémité avant du ruban sous les moyens d'application 68, avant le début du drapage. Ils peuvent être constitués par tout moyen de détection approprié tel que, par exemple, une cellule optique.

En complément à ces moyens de détection 94, le corps 14 de la tête de drapage porte également des moyens 96 de mesure de la longueur de ruban 18 déroulée de la bobine 16. Etant donné que la longueur du ruban contenu dans le rouleau emmagasinée sur la bobine 16 est connue, la mesure de la longueur de ruban déroulée permet, en complément avec les moyens 94 de détection de l'extrémité avant du ruban, de stopper le fonctionnement de la tête de drapage 10 avant que la bobine 16 ne soit complètement vide. Cette caractéristique permet d'éviter le drapage d'une découpe incomplète.

Dans la pratique, les moyens 96 de mesure de longueur de ruban déroulée peuvent notamment comprendre un galet maintenu élastiquement en contact avec le ruban 18, par exemple entre les moyens de guidage 28 et les moyens d'entraînement 20.

Grâce à la présence des moyens de bridage escamotables 78, la tête de drapage 10 permet de draper des découpes d'un produit sous forme de ruban de nature quelconque, que ce produit soit formé de fibres imprégnées de résine thermoplastique, ou encore de fibres imprégnées de résine thermodurcissable éventuellement à très faible pégosité. En effet, le maintien en position des découpes sur le marbre est assuré quelle que soit la force de collage qui existe entre les différentes couches.

Par ailleurs, la présence des moyens de chauffage 56 et des moyens de refroidissement associés 76 permet d'utiliser avantageusement la tête de drapage 10 dans le cas où le ruban de matériau drapé est formé de fibres imprégnées de résine thermoplastique.

En outre, la présence des moyens de coupe mobiles 30 autorise le drapage à grande vitesse, en permettant la coupe du ruban sans arrêt de son défilement.

## Revendications

1. Tête de drapage (10), pour la fabrication de plaques en matériau composite, à partir d'un rouleau de produit sous forme de ruban (18), ladite tête comprenant un corps (14) apte à être déplacé selon une direction de déplacement (F2) et supportant successivement, selon une direction (F1) de déroulement du ruban (18) :
- des moyens (30) de coupe du ruban (18), aptes à réaliser dans celle-ci des découpes successives ;
- des moyens d'application (68), pour appliquer successivement chaque découpe sur un marbre de référence (12) extérieur à la tête de drapage (10) ; et
- des moyens (78) de bridage escamotables, comprenant au moins un organe presseur (80), un moyen de commande (88) pour appliquer cet organe presseur (80) contre le marbre (12), de façon à bloquer, par pression, une partie d'extrémité avant de chaque découpe successive entre cet organe presseur et le marbre;
- des moyens de guidage (89) autorisant un déplacement relatif entre le corps (14) et l'organe presseur (80) selon ladite direction de déplacement, et des moyens de rappel (90) aptes à assurer un retour de l'organe presseur (80) dans une position d'attente proche des moyens d'application (68), lorsque le moyen de commande (88) est relâché.

2. Tête de drapage selon la revendication 1, dans laquelle l'organe presseur (80) et le moyen de commande (88) sont portés par un même support (86), ce support étant monté sur le corps (14) par l'intermédiaire des moyens de guidage (89), les moyens de rappel (90) étant interposés entre le corps (14) et le support (86).

3. Tête de drapage selon la revendication 2, dans laquelle l'organe presseur (80) est monté à une première extrémité d'un levier (82) articulé sur le support (86) dans une région centrale, le moyen de commande (88) agissant sur une extrémité opposée du levier.

4. Tête de drapage selon l'une quelconque des revendications précédentes, appliquée au cas où le produit à draper est formé de fibres préimprégnées d'un matériau thermoplastique, dans laquelle des moyens de chauffage (56) sont montés sur un support (64) lié aux moyens d'application (14), entre les moyens de coupe (30) et les moyens d'application (68), et des moyens de refroidissement (76) sont associés aux moyens d'application.

5. Tête de drapage selon la revendication 4, dans laquelle les moyens de chauffage (56) comprennent un organe (58) en forme de sabot, monté sur le support (64) et pourvu d'un orifice de soufflage (60) d'air chaud, à son extrémité avant tournée vers une interface ruban (18)-marbre (12).

6. Tête de drapage selon la revendication 5, dans laquelle les moyens de chauffage (56) comprennent une buse de préchauffage (57) du ruban (18) et une buse de préchauffage (58) du marbre (12).

7. Tête de drapage selon la revendication 6, dans laquelle l'orifice de soufflage (60) et les buses de préchauffage (57,58) sont à ouvertures réglables.

8. Tête de drapage selon l'une quelconque des revendications 5 à 7, dans laquelle les moyens d'application (68) comprennent un rouleau d'application (70) monté sur le corps (14) immédiatement en aval de l'organe (58) en forme de sabot, et des moyens (72,74) pour appliquer ce rouleau d'application contre le marbre (12) selon une pression donnée, réglable.

9. Tête de drapage selon la revendication 8, dans laquelle les moyens de refroidissement (76) agissent sur une région du rouleau d'application (70) située en aval de la région de ce rouleau en contact avec le marbre (12).

10. Tête de drapage selon l'une quelconque des revendications précédentes, dans laquelle les moyens de coupe (30) comprennent un ensemble mobile (32) comportant un système de coupe (36) et un moyen de pincement (38) pour lier en translation le système de coupe (36) et le ruban (18) de produit déroulée de la bobine (16), des deuxièmes moyens de guidage (34) autorisant un déplacement relatif entre l'ensemble mobile (32) et le corps (14) selon une direction (F1) de déroulement du ruban, et des deuxièmes moyens de rappel (52) aptes à assurer un retour de l'ensemble mobile (32) dans une position de repos, lorsque le moyen de pincement et le système de coupe sont relâchés.

11. Tête de drapage selon l'une quelconque des revendications précédentes, dans laquelle le corps (14) supporte de plus des moyens (16) de stockage du rouleau, des moyens (20) d'entraînement du ruban, des moyens (28) de positionnement latéral du ruban, des moyens (94) de détection de l'extrémité avant du ruban et des moyens (96) de mesure de longueur de bande déroulée.

12. Tête de drapage selon la revendication 11, dans laquelle les moyens (16) de stockage du rouleau incluent des moyens de tension (17) du ruban.

## Patentansprüche

1. Bandauflagekopf (10) für die Herstellung von Verbundmaterialplatten ausgehend von einer Rolle des Produkts in Form eines Bandes (18), wobei der Kopf einen Körper (14) umfasst, der in einer Bewegungsrichtung (F2) bewegt werden kann und nacheinander in einer Abrollrichtung (F1) des Bandes (18) trägt:
Mittel (30) zum Durchtrennen bzw. Zuschneiden des Bandes (18), die in diesem aufeinanderfolgende Zuschnitte vornehmen können,
Aufbringungsmittel (68) zum aufeinanderfolgenden Aufbringen jedes Zuschnitts auf eine Referenz-Grundplatte (12) außerhalb des Auflagekopfs (10), und
Einzieh- bzw. versenkbare Flanschmittel (78), die mindestens ein Druckelement (80) und ein Steuermittel (88) zum Anlegen dieses Druckelements (80) an die Grundplatte (12) umfassen, so dass durch Druck ein vorderer Endabschnitt jedes aufeinander folgenden Zuschnittes zwischen diesem Druckelement und der Grundplatte festgehalten wird, **dadurch gekennzeichnet, dass** die einzieh- bzw. versenkbaren Flanschmittel (78) Führungsmittel (89) aufweisen, die eine Relativbewegung zwischen dem Körper (14) und dem Druckelement (80) in der Bewegungsrichtung ermöglichen, sowie Rückführmittel (90), die eine Rückführung des Druckmittels (80) in eine Wartestellung nahe den Aufbringungsmitteln (68) bewirken, wenn das Steuermittel (88) losgelassen wird.

2. Bandauflagekopf nach Anspruch 1, wobei das Druckmittel (80) und das Steuermittel (88) von ein und derselben Halterung (86) getragen werden, wobei diese Halterung am Körper (14) mittels der Führungsmittel (89) angebracht ist und die Rückführmittel (90) zwischen dem Körper (14) und der Halterung (86) eingefügt sind.

3. Bandauflagekopf nach Anspruch 2, wobei das Druckelement (80) an einem ersten Ende eines Hebels (82) angebracht ist, der in einem zentralen Bereich an der Halterung (86) angelenkt ist, wobei das Steuermittel (88) auf ein entgegengesetztes Ende des Hebels einwirkt.

4. Bandauflagekopf nach einem der vorangehenden Ansprüche, angewandt auf den Fall, bei dem das anzulegende bzw. aufzulegende Produkt aus vorimprägnierten Fasern eines thermoplastischen Materials gebildet ist, wobei Heizmittel (56) auf einer mit den Anlegemitteln (14) verbundene Halterung (64) zwischen den Schneidemitteln (30) und den Aufbringungsmitteln (68) angebracht sind, und Kühlungsmittel (76) den Aufbringungsmitteln beigeordnet sind.

5. Bandauflagekopf nach Anspruch 4, wobei die Heizmittel (56) ein Element (58) in Schuhform umfassen, das an der Halterung (64) angebracht ist und mit einer Heißluft-Einblasöffnung (60) an seinem vorderen, einer Grenzfläche zwischen dem Band (18) und der Grundplatte (12) zugewandten Ende versehen ist.

6. Bandauflagekopf nach Anspruch 5, wobei die Heizmittel (56) eine Vorheizdüse (57) des Bandes (18) und eine Vorheizdüse (58) der Grundplatte (12) umfassen.

7. Bandauflagekopf nach Anspruch 6, wobei die Einblasöffnung (60) und die Vorheizdüsen (57, 58) einstellbare Öffnungen aufweisen.

8. Bandauflagekopf nach einem der Ansprüche 5 bis 7, wobei die Aufbringungsmittel (68) eine Anlagewalze (70), die am Körper (14) unmittelbar stromab vom schuhförmigen Element (58) angebracht ist, sowie Mittel (72, 74) zur Aufbringung bzw. Anlage dieser Anlagewalze an die Grundplatte (12) mit einem gegebenen, einstellbaren Druck umfassen.

9. Bandauflagekopf nach Anspruch 8, wobei die Kühlungsmittel (76) auf einen Bereich der Anlagewalze (70) einwirken, der stromab von dem Kontakt mit der Grundplatte (12) stehenden Bereich dieser Walze gelegen ist.

10. Bandauflagekopf nach einem der vorangehenden Ansprüche, wobei die Schneidemittel (30) eine mobile Einheit (32) mit einem Schneidsystem (36) sowie ein Klemmittel (38) zum Verbinden des Schneidsystems (36) und des Bandes (18) des von der Spule (16) abgerollten Produkts bei der Translation, wobei zweite Führungsmittel (34) eine Relativbewegung zwischen der mobilen Einheit (32) und dem Körper (14) in einer Richtung (F1) des Abrollens des Bandes ermöglichen, und zweite Rückführmittel (52), die eine Rückführung der mobilen Einheit (32) in eine Ruhestellung ausführen können, wenn das Klemmittel und das Schneidsystem losgelassen werden, aufweisen.

11. Bandauflagekopf nach einem der vorangehenden Ansprüche, wobei der Körper (14) außerdem Mittel (16) zur Lagerung der Walze, Mittel (20) zum Antreiben des Bandes, laterale Positionierungsmittel (28) des Bandes, Erfassungsmittel (94) des vorderen Endes des Bandes sowie Mittel (96) zum Messen der Länge des abgerollten Bandes trägt.

12. Bandauflagekopf nach Anspruch 11, wobei die Mittel (16) zur Lagerung der Walze Mittel zum Spannen (17) des Bandes aufweisen.

## Claims

1. Tape laying head (10) for the manufacture of plates of composite material, starting with a roll of product in the form of tape (18), the said head comprising a body (14) capable of being displaced in a displacement direction (F2) and supporting successively, in a direction (F1) of unrolling of the tape (18):
- means (30) for cutting the tape (18), able to produce successive cut pieces;
- application means (68) for applying successively each cut piece to a reference plate (12) outside the tape laying head (10): and
- retractable clamping means (78), comprising at least one presser member (80), a control means (88) for applying the presser member (80) against the plate (12), in such a way as to clamp by pressure a forward end part of each cut piece successively between the presser member and the plate;
**characterised in that** the retractable clamping means (78) comprise guide means (89) allowing a relative displacement between the body (14) and the presser member (80) in the said direction of displacement, and recall means (90) able to ensure return of the presser member (80) into a standby position near the application means (68), while the control means (88) is released.

2. Tape laying head according to claim 1, in which the presser member (80) and the control member (88) are carried by a common support (86), this support being mounted on the body (14) by means of the guide means (89), the recall means (90) being interposed between the body (14) and the support (86).

3. Tape laying head according to claim 2, in which the presser member (80) is mounted on a first end of a lever (82) articulated to the support (86) in a central region, the control means (88) acting on the opposite end of the lever.

4. Tape laying head according to one of the preceding claims, applied to the case where the product being laid is formed of fibres pre-impregnated with a thermoplastic material, in which heating means (56) are mounted on a support (64) connected to the application means (14), between the cutting means (30) and the application means (68), and cooling means (76) are associated with the application means.

5. Tape laying head according to claim 4, in which the heating means (56) comprise a member (58) in the form of a shoe, mounted on the support (64) and provided with an orifice (60) for blowing hot air, at the forward extremity inclined towards an interface between the tape (18) and the plate (12).

6. Tape laying head according to claim 5, in which the heating means (56) comprise a pre-heating nozzle (57) for the tape (18) and a pre-heating nozzle (58) for the plate (12).

7. Tape laying head according to claim 6, in which the blowing orifice (60) and the pre-heating nozzles (57, 58) have adjustable openings.

8. Tape laying head according to one of claims 5 to 7, in which the application means (68) comprise an application roller (70) mounted on the body (14) immediately downstream of the member (58) in the form of a shoe, and means (72, 74) for applying the application roller to the plate (12) with a given pressure, which is adjustable.

9. Tape laying head according to claim 8, in which the cooling means (76) act on a region of the application roller (70) located downstream of the region of the roller in contact with the plate (12).

10. Tape laying head according to one of the preceding claims, in which the cutting means (30) comprise a movable assembly (32) having a cutting system (36) and a clamping means (38) for connecting in translation the cutting system (36) and the tape (18) of product unrolling from the spool (16), second guide means (34) allowing a relative displacement between the movable assembly (32) and the body (14) in a direction (F1) of unrolling of the tape, and second recall means (52) able to ensure the return of the movable assembly (32) to a rest position, while the clamping means and the cutting system are released.

11. Tape laying head according to one of the preceding claims, in which the body (14) also supports means (16) for storing the rolls, means (20) for driving the tape, means (28) for laterally positioning the tape, means (94) for detecting the forward end of the tape and means (96) for measuring the length of the unrolled band.

12. Tape laying head according to claim 11, in which the means (16) for storing the rolls includes tensioning means (17) for the tape.
